# EUROPÄISCHE PATENTSCHRIFT

(11) **EP 0 640 270 B1**
(45) Veröffentlichungstag und Bekanntmachung des Hinweises auf die Patenterteilung: **10.01.1996**
(21) Anmeldenummer: 92910247.3
(22) Anmeldetag: 15.05.1992
(51) Int. Cl.: H05B 3/28, F24D 13/02

(54) **HEIZVORRICHTUNG**
HEATING DEVICE
DISPOSITIF DE CHAUFFAGE

(43) Veröffentlichungstag der Anmeldung: 01.03.1995
(73) Patentinhaber: KLEMT, Manuela, D-83024 Rosenheim (DE); KLEMT, Heinrich, D-83024 Rosenheim (DE)
(72) Erfinder: KLEMT, Heinrich, D-8200 Rosenheim (DE)
(74) Vertreter: Wallinger, Michael, Dr.-Ing.
(86) Internationale Anmeldenummer: EP9201068
(87) Internationale Veröffentlichungsnummer: WO9323969

(56) Entgegenhaltungen:
- DE-A- 3 932 101
- DE-U- 9 102 467

## Beschreibung

Die vorliegende Erfindung betrifft eine Heizvorrichtung mit einem im wesentlichen plattenförmigen Strahlungskörper, der z.B. aus Natur- oder Kunststein besteht, und der eine erste Fläche aufweist, die zur Abgabe einer Wärmestrahlung vorgesehen ist, sowie eine dieser gegenüberliegende zweiten Fläche, an welcher eine elektrische Heizeinrichtung vorgesehen ist.

Diese Heizvorrichtungen werden zur Raumheizung in Gebäuden verwendet, und zwar als Hauptheizung oder als Zusatzheizung zu vorhandenen Heizeinrichtungen.

Eine Heizvorrichtung der eingangs genannten Art ist mit dem DE-U-91 02 467 bekanntgeworden. Bei dieser bekannten Heizvorrichtung ist die elektrische Heizeinrichtung als dünne Platte ausgebildet, welche aus Metall bestehende elektrische Heizleiter aufweist. Diese dünne Platte ist durch eine Klebeschicht mit der Rückseite des Strahlungskörpers verbunden. Auf der dem Strahlungskörper abgewandten Seite der plattenförmigen Heizeinrichtung ist eine Schicht aus Mineralwolle aufgebracht. Die Heizeinrichtung und diese Mineralwollschicht wird durch eine Rückwand aus Aluminiumblech abgedeckt, welche beispielsweise über Dübel mit dem Strahlungskörper verschraubt ist.

Obwohl diese Heizvorrichtung sehr zufriedenstellend arbeitet und ihr Fertigungsaufwand gegenüber früheren Heizvorrichtungen mit Natur- oder Kunststeinplatten erheblich vermindert ist, hat sich doch gezeigt, daß eine weitere Reduzierung des Fertigungsaufwandes wünschenswert ist. Weiterhin hat sich herausgestellt, daß das Verhältnis von Strahlungswärme zur Konvektionswärme, welche bei derartigen Heizvorrichtungen möglichst hoch sein sollte, durch diese bekannte Heizvorrichtung zwar verbessert wird, daß weitere Verbesserungen aber durchaus noch erstrebenswert erscheinen.

Der vorliegenden Erfindung liegt deshalb die Aufgabe zugrunde, eine Heizvorrichtung zu schaffen, welche einfach und kostengünstig herzustellen ist und welche außerdem ein günstiges Verhältnis zwischen Strahlungswärme und Konvektionswärme aufweist.

Diese Aufgabe wird erfindungsgemäß durch den Gegenstand des Anspruches 1 gelöst.

Zu bevorzugende Weiterbildungen der Erfindung sind Gegenstand der Unteransprüche.

Bei der erfindungsgemäßen Heizvorrichtung wird ein im wesentlichen plattenförmiger Strahlungskörper verwendet, der vorzugsweise aus Marmor besteht. Statt Marmor kann aber auch ein anderer Naturstein, wie z.B. Granit, verwendet werden. Außerdem ist auch die Verwendung von Kunststein- und Keramikkörpern vorteilhaft. An der Rückseite des Strahlungskörpers ist ein plattenförmiges Heizelement angeordnet. Dieses Heizelement ist in eine Kunststoffschicht eingeschäumt und dadurch mit der Rückseite des Strahlungskörpers verbunden.

Statt der mehreren Herstellungsgänge, die bislang erforderlich waren, genügt es somit, den Strahlungskörper in eine Form einzulegen, die elektrische Heizeinrichtung auf dem Strahlungskörper aufzulegen und anschließend die Form zu schließen und flüssiges Kunstharz in die Form zu gießen, welches in der Form ausschäumt und einerseits die Heizeinrichtung an dem Strahlungskörper festhält, andererseits aber auch eine Wärmeisolation des Strahlungskörpers zur Rückwand hin bewirkt. Durch diese Wärmeisolation wird das Verhältnis von Strahlungswärme zur Konvektionswärme verbessert.

Durch eine besonders bevorzugte Gestaltung der Erfindung kann sowohl der Fertigungsaufwand noch weiter verringert werden als auch andererseits das Verhältnis von Strahlungswärme zur Konvektionswärme noch weiter erhöht werden. Gemäß dieser Ausgestaltung ist vorgesehen, daß eine Schaumschicht auf den Strahlungskörper aufgebracht ist, welche sowohl die elektrische Heizeinrichtung, eventuell von der Heizeinrichtung nicht abgedeckte Bereiche der Rückwand als auch die Seitenwände des Strahlungskörpers umschließt.

Diese Gestaltung hat den Vorteil, daß der Halt der Heizeinrichtung am Strahlungskörper durch die Seitenumschließung des Strahlungskörpers verbessert wird. Dazu kommt der Vorteil, daß die Wärmeisolation des Strahlungskörpers zur Seite hin ebenfalls verbessert ist, so daß die vordere Fläche des Strahlungskörpers, die die Strahlung abgibt, mit einem noch höheren Wirkungsgrad arbeitet.

Als weiterer Vorteil dieser Gestaltung ergibt sich, daß die Seitenkanten des Strahlungskörpers, also z.B. die Seitenkanten der Marmorplatte, nicht mit dem Aufwand bearbeitet werden müssen, der erforderlich ist, wenn diese Seitenwände sichtbar sind.

Als weiterer Vorteil ergibt sich, daß die gegen Schlag und Stoß empfindliche Seitenkante des Strahlungskörpers besser während des Transportes und des Gebrauches geschützt ist.

Der Begriff "plattenförmig" ist nicht so zu verstehen, daß der Strahlungsheizkörper nur als ebene Platte aufgebaut sein kann. Es ist ebenfalls möglich und im Rahmen der vorliegenden Erfindung, den Strahlungskörper davon abweichend zu gestalten, z.B. mit einer gebogenen Platte, die geometrisch gesehen, den Ausschnitt aus einer Zylinderwand darstellt. Eine derart aufgebaute Heizvorrichtung kann beispielsweise an einer zylindrischen Säule, wie sie als Gebäudestützsäule verwendet wird, angeordnet werden.

Das flachbauende elektrische Heizelement besteht vorzugsweise aus zwei Kunststoffplatten, zwischen denen ein elektrischer Heizdraht angeordnet ist. Als Heizdraht kann ein flacher Draht verwendet werden, bevorzugt ist jedoch die Verwendung eines Runddrahtes, der nicht nur billiger ist, sondern auch in der Verlegung einfacher und weniger bruchanfällig ist. Der Heizdraht wird vorzugsweise mäanderförmig verlegt, wobei die Verlegestruktur am Plattenrand dichter ist als in der Plattenmitte, um eine gleichmäßige Oberflächentemperatur der Strahlungsfläche des Strahlungskörpers zu gewährleisten.

Die beiden Kunststoffplatten, die zu beiden Seiten des Heizdrahtes angeordnet sind, sind vorzugsweise miteinander verklebt oder verschweißt. Die Fläche der Kunststoffplatte, die auf den Strahlungsheizkörper aufgelegt wird, ist vorzugsweise selbstklebend gestaltet, wodurch die Montage erheblich vereinfacht wird. Als Kunststoffmaterial kann jedes Material verwendet werden, welches die erforderliche Temperaturbeständigkeit und die erforderliche elektrische Isolationsfähigkeit aufweist.

Die dem elektrischen Heizelement zugeführte elektrische Energie wird vorzugsweise mittels eines Thermostaten geregelt, der an der Platte, z.B. an der Rückseite, befestigt ist. Der Thermostat ist mit einem Thermofühler versehen, der am Strahlungskörper befestigt, vorzugsweise aber unmittelbar in diesen eingelassen ist, und somit die Temperatur des Strahlungskörpers erfaßt. Die thermostatische Regelung hat zunächst eine Sicherheitsfunktion, da sie eine zu weit gehende Erhöhung der Temperatur des Strahlungskörpers verhindert. Weiterhin ist es damit möglich, die vom Strahlungskörper abgegebene Wärmemenge zu regulieren, wozu ein von Hand einstellbares Stellrad am Thermostat angeordnet ist.

Die Anbringung des Temperaturfühlers am oder im Strahlungsheizkörper hat den Vorteil, daß nicht die Raumtemperatur, sondern unmittelbar die Temperatur des Strahlungskörpers geregelt wird. Bei einer mit Strahlungswärme arbeitenden Raumheizung wird auch dann ein behagliches Gefühl erzielt, wenn die Raumtemperatur deutlich niedriger ist, als die übliche Raumtemperatur bei konvektiver Heizung. Würde man also die Regelung auf die Raumtemperatur abstellen, würde dies einen unnötig hohen Energieverbrauch nach sich ziehen.

Durch die thermostatische Regelung wird die elektrische Zufuhr zum Heizelement abgeschaltet, sobald die Plattentemperatur einen vorbestimmten Wert erreicht hat und wieder eingeschaltet, sobald die Temperatur unter einen vorgegebenen Wert fällt (Zweipunkt-Regelung).

Weitere Vorteile, Merkmale und Anwendungsmöglichkeiten der vorliegenden Erfindung ergeben sich aus der nachfolgenden Beschreibung eines Ausführungsbeispiels im Zusammenhang mit der Zeichnung. Darin zeigen:
- Fig. 1: eine Vorderansicht eines Ausführungsbeispiels der erfindungsgemäßen Seitenvorrichtung;
- Fig. 2: eine geschnittene Seitenansicht des Ausführungsbeispiels gemäß Fig. 1;
- Fig. 3: eine Teilschnittansicht der Heizeinrichtung für das Ausführungsbeispiel gemäß den Fig. 1 und 2.

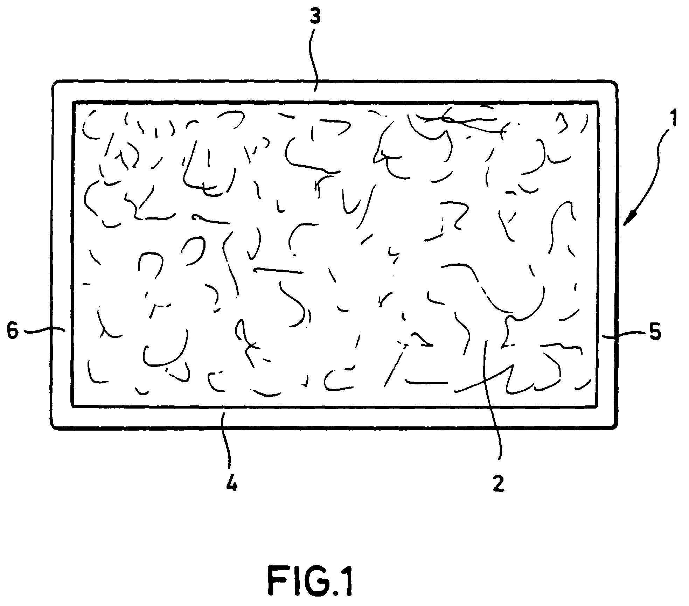

Ein Ausführungsbeispiel der erfindungsgemäßen Heizvorrichtung wird nun in bezug auf die Fig. 1 bis 3 beschrieben. Das Ausführungsbeispiel weist einen Strahlungskörper auf, der aus einer Marmorplatte besteht, die 30 mm dick ist und die zwischen 500 und 1200 mm lang und zwischen 500 und 600 mm breit ist.

Diese Marmorplatte weist eine Vorderseite 2a auf, durch die Strahlungswärme abgegeben werden soll, und eine Rückseite 2b.

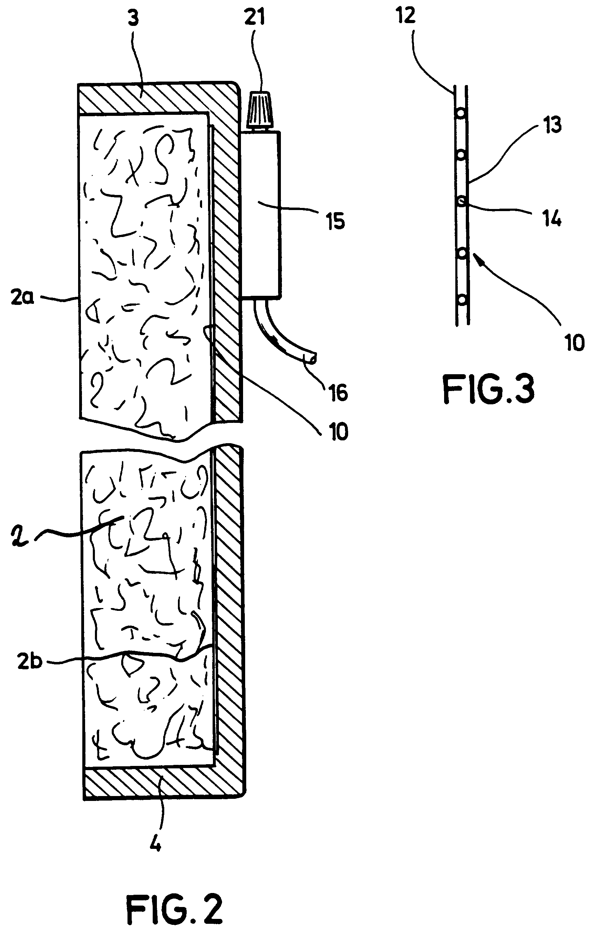

An dieser Rückseite 2b ist die Heizeinrichtung 10 angeordnet. Die Heizeinrichtung 10 besteht, wie in Fig. 3 im Detail dargestellt, aus einer ersten Kunststoffolie 12, einer dazu parallel angeordneten zweiten Kunststoffolie 13, in die elektrische Heizdrähte 14 eingebettet sind. Die elektrischen Heizdrähte sind, was in der Zeichnung im Detail nicht dargestellt ist, mit einem Elektroanschlußkasten 15 verbunden, der an der Rückseite der Heizvorrichtung angebracht worden ist und der ein Kabel 16 zum Anschluß der Heizvorrichtung an das elektrische Stromnetz aufweist.

Die Heizvorrichtung 10 sowie die Rückseite 2b der Marmorplatte und die Seitenwände der Marmorplatte sind vollständig mit einem Kunststoff-Hartschaum umhüllt. Der an der Rückwand anliegende Bereich der Schaumumhüllung ist beispielsweise 8 mm dick, während die die Seitenkanten der Marmorplatte umgebenden Bereiche 3, 4, 5, 6 des Schaumes z.B. 4 mm dick sein können.

In dem Elektroanschlußkasten 15 ist, in der Zeichnung nicht gesondert zu erkennen, ein elektronischer Thermostat 20 angeordnet, der mit einem Temperaturfühler (in der Zeichnung nicht dargestellt) verbunden ist. Dieser Temperaturfühler ist von der Rückseite 2b der Marmorplatte aus in diese eingelassen, vorzugsweise eingeklebt und mit dem Thermostat 20 im Elektroanschlußkasten 15 durch (nicht dargestellte) elektrische Leitungen verbunden. Zur Regelung des Thermostaten 20 ist ein Drehknopf 21 vorgesehen, der so an der Rückseite der Heizvorrichtung angeordnet ist, daß er problemlos vom Benutzer betätigt werden kann. Der Drehknopf 21 kann auch als Ein/Aus-Schalter dienen.

Der Thermostat begrenzt die maximale Temperatur der Strahlungsheizvorrichtung auf einen vorgewählten Wert, beim Ausführungsbeispiel auf 90°. In diesem Zusammenhang ist zu berücksichtigen, daß aufgrund der geringen Wärmeleitfähigkeit des Marmors oder anderer entsprechender Natur- oder Kunststeinarten, eine Verbrennung bei einer zufälligen Berührung des Strahlungsheizkörpers auch bei derart hohen Temperaturen nicht erfolgt.

Für die Kunststoffolien der Heizeinrichtung wird vorzugsweise eine Polyesterfolie verwendet.

Um die Festigkeit des Hartschaumes, insbesondere bei größeren Abmessungen des Strahlungskörpers zu erhöhen, kann vor dem Aufgießen des schaumfähigen Kunststoffes eine Lage einer Glasfaserverstärkung, vorzugsweise einer als Wirrvlies gestalteten Matte, erfolgen. Diese Matte wird beim Aufschäumen in den entstehenden Schaum eingebettet und erhöht dessen Festigkeit.

Der Strahlungskörper wird folgendermaßen hergestellt:

Der Strahlungskörper wird derart in eine Form eingelegt, daß die Vorderwand 2a horizontal nach unten weist. Anschließend wird die elektrische Heizeinrichtung 10 auf die Rückwand 2b der Marmorplatte aufgelegt. Dabei kann, falls dies wünschenswert ist, eine Fixierung der Heizeinrichtung mit Klebstoff od.dgl. erfolgen, um ein Verschieben während des Aufschäumvorganges zu verhindern.

Anschließend wird flüssiges Kunstharz in die Form gegossen und aufgeschäumt. Dabei bildet sich die gewünschte Hartschaumschicht, die die Rückwand und die Seitenwände der Platte vollständig umhüllt.

Die Hartschaumschicht hält die Heizeinrichtung 10 an der Rückwand des Strahlungskörpers 2 fest und bewirkt außerdem eine Wärmeisolation zur Rückwand des Strahlungskörpers hin. Außerdem werden durch die Hartschaumschicht die Seitenkanten des Strahlungskörpers 2 geschützt.

Nach dem Entnehmen der fertigen Heizvorrichtung aus der Form wird der Hartschaum vorzugsweise lackiert, was den Schaum schützt und ihm überdies ein gefälligeres Aussehen verleiht.

Als Hartschaum wird vorzugsweise Polyurethan verwendet, es ist jedoch auch die Verwendung von anderen Schäumen möglich, vorausgesetzt, daß ihre Temperaturbeständigkeit ausreicht, um den durch die Heizeinrichtung 10 erzeugten Temperaturen standzuhalten. Weiterhin sollte der Schaum auch elektrisch isolierende Eigenschaften aufweisen.

## Patentansprüche

1. Heizvorrichtung mit einem im wesentlichen plattenförmigen Strahlungskörper (2), der eine erste Fläche (2a) zur Abgabe einer Wärmestrahlung aufweist, sowie eine dieser gegenüberliegende zweite Fläche (2b), an der eine flachbauende elektrische Heizeinrichtung (10) angeordnet ist,
**dadurch gekennzeichnet,**
daß zumindest die zweite Fläche (2b) des Strahlungskörpers sowie die Heizeinrichtung (10) mit einer Kunststoff-Hartschaumschicht bedeckt sind, welche unmittelbar auf die zweite Fläche (2b) des Strahlungskörpers (2) aufgeschäumt ist.

2. Vorrichtung gemäß Anspruch 1, **dadurch gekennzeichnet,** daß die Hartschaumschicht so gestaltet ist, daß sie die, die zweite Fläche bildende Rückseite und zumindest zwei gegenüberliegende Seitenwände (3, 4) des Strahlungskörpers abdeckt.

3. Vorrichtung gemäß Anspruch 2, **dadurch gekennzeichnet,** daß die Kunststoff-Hartschaumschicht so gestaltet ist, daß sie die Rückseite des Strahlungskörpers sowie dessen Seitenkanten abdeckt.

4. Vorrichtung gemäß mindestens einem der Ansprüche 1 bis 3, **dadurch gekennzeichnet,** daß die Hartschaumschicht zwischen 3 und 12 mm dick ist.

5. Vorrichtung gemäß Anspruch 4, **dadurch gekennzeichnet,** daß die Hartschaumschicht im Bereich der Rückwand zwischen 6 und 10 mm dick ist.

6. Vorrichtung gemäß mindestens einem der Ansprüche 1 bis 5, **dadurch gekennzeichnet,** daß die Hartschaumschicht Polyurethan aufweist.

7. Vorrichtung gemäß mindestens einem der Ansprüche 1 bis 6, **dadurch gekennzeichnet,** daß die Heizeinrichtung zwei Kunststoffplatten oder -folien aufweist, zwischen denen ein elektrischer Heizdraht angeordnet ist.

8. Vorrichtung gemäß mindestens einem der Ansprüche 1 bis 7, **dadurch gekennzeichnet,** daß eine Regeleinrichtung vorgesehen ist, die mit einem an oder in dem Strahlungskörper angeordneten Temperaturfühler verbunden ist, und welche die Temperatur des Strahlungskörpers während des Betriebes auf einem im wesentlichen konstanten Wert hält.

9. Vorrichtung gemäß Anspruch 8, **dadurch gekennzeichnet,** daß die Regeleinrichtung so gestaltet ist, daß die Heizeinrichtung abgeschaltet wird, sobald die Temperatur des Strahlungskörpers einen vorbestimmten, im wesentlichen durch Sicherheitserwägungen bestimmten Grenzwert übersteigt.

10. Vorrichtung gemäß Anspruch 8, **dadurch gekennzeichnet,** daß die Regeleinrichtung elektronische Bauelemente aufweist und so gestaltet ist, daß die Temperatur des Strahlungskörpers innerhalb einer geringen Schwankungsbreite, vorzugsweise in einem Bereich zwischen +1° und -1°C, vom vorbestimmten Sollwert gehalten ist.

## Claims

1. Heating device with an essentially plate-like radiant element (2), having a first surface (2a) for giving off heat radiation, as well as a second surface (2b) opposite to it, to which a flatly designed electric heating device (10) is arranged.
characterized in that
at least the second surface (2b) of the radiant element as well as the heating device (10) is covered with a plastic high-resistance foam layer, foamed directly on to the second surface (2b) of the radiant element (2).

2. Heating device in accordance with claim 1, characterized in that the high-resistance foam layer is designed in such a way that it covers the back side forming the second surface and at least two opposing side walls (3, 4) of the radiant element.

3. Heating device in accordance with claim 2, characterized in that the plastic high-resistance foam layer is designed in such a way that it covers the back side of the radiant element as well as its lateral edges.

4. Heating device in accordance with at least one of the claims 1 to 3, characterized in that the high-resistance foam layer is between 3 and 12 mm thick.

5. Heating device in accordance with claim 4, characterized in that the high-resistance foam layer is between 6 and 10 mm thick at the back wall.

6. Heating device in accordance with at least one of the claims 1 to 5, characterized in that the high-resistance foam layer includes polyurethane.

7. Heating device in accordance with at least one of the claims 1 to 6, characterized in that the heating device includes two plastic plates or foils, an electric heating wire being arranged in between.

8. Heating device in accordance with at least one of the claims 1 to 7, characterized in that a control device is provided, connected with a temperature feeler, arranged at or in the radiant element, keeping the temperature of the radiant element to an essentially constant value during operation.

9. Heating device in accordance with claim 8, characterized in that the control device is designed in such a way that the heating device is switched off, as soon as the temperature of the radiant element exceeds a predetermined limit value, mainly determined by safety deliberations.

10. Heating device in accordance with claim 8, characterized in that the control unit includes electronic components designed in such a way that the temperature of the radiant body is kept within a small variation range, preferably in a range between +1° and -1°C, of the predetermined desired value.

## Revendications

1. Appareil de chauffage comprenant un corps émetteur de rayonnement (2) sensiblement en forme de plaque, qui présente une première surface (2a) destinée à émettre un rayonnement thermique ainsi qu'une deuxième surface (2b) placée à l'opposé de celle-ci, sur laquelle est agencé un dispositif de chauffage électrique (10) de forme plate,
caractérisé
en ce qu'au moins la deuxième surface (2b) du corps émetteur de rayonnement ainsi que le dispositif de chauffage (10) sont recouverts d'une couche de mousse dure de résine synthétique qui est directement moussée sur la deuxième surface (2b) du corps émetteur de rayonnement (2).

2. Appareil selon la revendication 1, caractérisé en ce que la couche de mousse dure est configurée de manière à recouvrir la face arrière, formant la deuxième surface, et au moins deux parois latérales opposées (3, 4) du corps émetteur de rayonnement.

3. Appareil selon la revendication 2, caractérisé en ce que la couche de mousse dure de résine synthétique est configurée de manière à recouvrir la face arrière du corps émetteur de rayonnement ainsi que ses chants latéraux.

4. Appareil selon au moins une des revendications 1 à 3, caractérisé en ce que la couche de mousse dure est d'une épaisseur d'entre 3 et 12 mm.

5. Appareil selon la revendication 4, caractérisé en ce que la couche de mousse dure est d'une épaisseur d'entre 6 et 10 mm dans la région de la paroi arrière.

6. Appareil selon au moins une des revendications 1 à 5, caractérisé en ce que la couche de mousse dure comprend du polyuréthane.

7. Dispositif selon au moins une des revendications 1 à 6, caractérisé en ce que le dispositif de chauffage comprend deux plaques ou feuilles de résine synthétique entre lesquelles est disposé un fil électrique chauffant.

8. Appareil selon au moins une des revendications 1 à 7, caractérisé en ce qu'il y est prévu un dispositif de réglage qui est connecté à un capteur de température agencé sur ou dans le corps émetteur de rayonnement, et qui maintient la température du corps émetteur de rayonnement à une valeur sensiblement constante pendant le fonctionnement.

9. Appareil selon la revendication 8, caractérisé en ce que le dispositif de réglage est conformé de manière que le dispositif de chauffage soit éteint dès que la température du corps émetteur de rayonnement excède une valeur limite prédéterminée, sensiblement fixée par des considérations de sécurité.

10. Appareil selon la revendication 8, caractérisé en ce que le dispositif de réglage comprend des composants électroniques et est configuré de manière que la température du corps émetteur de rayonnement soit maintenue dans une étroite plage de variation, de préférence dans une plage comprise entre +1°C et -1°C de part et d'autre de la valeur de consigne prédéterminée.
